# EUROPEAN PATENT APPLICATION

(11) **EP 4 837 803 A1**
(43) Date of publication of application: **11.11.2026**
(21) Application number: 24919991.0
(22) Date of filing: 25.12.2024
(51) Int. Cl.: B60W 30/095, B60W 30/12

(54) **VEHICLE LATERAL CONTROL METHOD AND APPARATUS, AND VEHICLE**

(30) Priority: 26.01.2024 CN 202410119727
(71) Applicant: Yinwang Intelligent Technologies Co., Ltd., Shenzhen, Guangdong 518110 (CN)
(72) Inventor: PAN, Wei, Shenzhen, Guangdong 518110 (CN); QI, Renjie, Shenzhen, Guangdong 518110 (CN); ZHANG, Renxie, Shenzhen, Guangdong 518110 (CN); ZHU, Xuechen, Shenzhen, Guangdong 518110 (CN)
(74) Representative: Maiwald GmbH
(86) International application number: PCT/CN2024/142145
(87) International publication number: WO 2025/156913

(57) **Abstract**

This application provides a vehicle lateral control method and apparatus, and a vehicle. This application is applicable to the field of intelligent driving. The method includes: obtaining a first guiding trajectory, where the first guiding trajectory is a trajectory obtained after a lateral active safety function is pre-activated; and determining, based on a first collision risk incurred when a vehicle travels along the first guiding trajectory, whether to activate the lateral active safety function. This application is applicable to an intelligent vehicle or an electric vehicle, to help improve accuracy of activating the lateral active safety function, thereby enhancing driving/riding experience of a user.

## Description

This application claims priority to Chinese Patent Application No. 202410119727.5, filed with the China National Intellectual Property Administration on January 26, 2024 and entitled "VEHICLE LATERAL CONTROL METHOD AND APPARATUS, AND VEHICLE", which is incorporated herein by reference in its entirety.

### TECHNICAL FIELD

This application relates to the field of intelligent driving, and more specifically, to a vehicle lateral control method and apparatus, and a vehicle.

### BACKGROUND

When a vehicle encounters an unexpected risk, a lateral active safety function (if equipped) intervenes if a condition is satisfied, to avoid or reduce injury. Lateral displacement may occur when the lateral active safety function intervenes to guide the vehicle to a specified location. In some scenarios, activating the lateral active safety function does not align with a user's expectation, resulting in unsatisfactory driving/riding experience.

### SUMMARY

This application provides a vehicle lateral control method and apparatus, and a vehicle, to help improve accuracy of activating a lateral active safety function, thereby enhancing driving/riding experience of a user.

According to a first aspect, this application provides a vehicle lateral control method. The method includes: obtaining a first guiding trajectory, where the first guiding trajectory is a trajectory obtained after a lateral active safety function is pre-activated; and determining, based on a first collision risk incurred when a vehicle travels along the first guiding trajectory, whether to activate the lateral active safety function.

Based on the foregoing technical solution, whether to activate the lateral active safety function may be determined by evaluating the collision risk incurred when the vehicle travels along the guiding trajectory. This helps improve accuracy of activating the lateral active safety function, and can avoid a secondary safety risk caused by activating the lateral active safety function, to help enhance driving/riding experience of a user.

In some possible implementations, determining, based on the first collision risk incurred when the vehicle travels along the first guiding trajectory, whether to activate the lateral active safety function includes: if the first collision risk incurred when the vehicle travels along the first guiding trajectory is greater than a preset collision risk, determining not to activate the lateral active safety function.

In some possible implementations, the method further includes: determining the first collision risk based on a time to collision (time to collision, TTC) between the vehicle and an obstacle when the vehicle travels along the first guiding trajectory.

In some possible implementations, obtaining the first guiding trajectory includes: obtaining the first guiding trajectory when a distance between a center line (or a longitudinal axis) of the vehicle and a center line of the vehicle's lane is greater than or equal to a first preset distance or a distance between a tire of the vehicle and a lane line is less than or equal to a second preset distance. The first guiding trajectory is a guiding trajectory planned after a lane keeping assist (lane keeping assist, LKA) function or an emergency lane keeping assist (emergency lane keeping assist, ELKA) function is pre-activated.

In some possible implementations, obtaining the first guiding trajectory includes: obtaining the first guiding trajectory when a collision risk between the vehicle and an obstacle ahead is greater than or equal to a preset collision risk. The first guiding trajectory is a guiding trajectory planned after an autonomous emergency steering (autonomous emergency steering, AES) or emergency steering assist (emergency steering assist, ESA) function is pre-activated.

In some possible implementations, pre-activating the lateral active safety function may be understood as that the lateral active safety function is not activated yet. A purpose of pre-activating the lateral active safety function is to plan a guiding trajectory for the vehicle, so as to evaluate safety of the guiding trajectory. The vehicle may determine, based on a safety evaluation result of the guiding trajectory, whether to activate the lateral active safety function.

With reference to the first aspect, in some implementations of the first aspect, determining, based on the first collision risk incurred when the vehicle travels along the first guiding trajectory, whether to activate the lateral active safety function includes: determining, based on the first collision risk and somatosensory comfort brought to a user when the vehicle travels along the first guiding trajectory, whether to activate the lateral active safety function. The user is in a cabin of the vehicle.

In some possible implementations, the somatosensory comfort is determined based on a distance between the vehicle and the obstacle when the collision risk between the vehicle and the obstacle is less than the preset collision risk (or there is no collision risk between the vehicle and the obstacle), and/or a driver's behavior of stepping on a brake pedal.

Based on the foregoing technical solution, whether to activate the lateral active safety function may be determined by evaluating the collision risk incurred and experience comfort brought to the user when the vehicle travels along the guiding trajectory. This can avoid the secondary safety risk caused by activating the lateral active safety function, and can also avoid making the user feel uncomfortable and oppressed, to help enhance the driving/riding experience of the user.

In some possible implementations, determining, based on the first collision risk and the somatosensory comfort brought to the user when the vehicle travels along the first guiding trajectory, whether to activate the lateral active safety function includes: determining, based on a first weight, a second weight, the first collision risk, and the somatosensory comfort, whether to activate the lateral active safety function. The first weight is a weight corresponding to the first collision risk. The second weight is a weight corresponding to the somatosensory comfort. The first weight is greater than the second weight.

With reference to the first aspect, in some implementations of the first aspect, the lateral active safety function is a lane keeping function. The vehicle is in a first lane. The first lane includes a first lane line and a second lane line. Obtaining the first guiding trajectory includes: obtaining the first guiding trajectory when a distance between the vehicle and the first lane line is less than or equal to a first preset distance. Determining, based on the first collision risk and the somatosensory comfort brought to the user when the vehicle travels along the first guiding trajectory, whether to activate the lateral active safety function includes: determining not to activate the lane keeping function if the distance between the vehicle and the obstacle is less than or equal to a preset distance when the vehicle travels along the first guiding trajectory. The obstacle is a vehicle straddling the second lane line.

Based on the foregoing technical solution, the vehicle may not activate the lane keeping function when determining that a distance between the vehicle and another vehicle straddling a lane line is excessively short after the lane keeping function is activated. This can avoid making the user feel uncomfortable and oppressed due to the activation of the lane keeping function, to help enhance the driving/riding experience of the user.

In some possible implementations, the lane keeping function may include LKA or ELKA.

In some possible implementations, determining not to activate the lane keeping function if the distance between the vehicle and the obstacle is less than or equal to the preset distance when the vehicle travels along the first guiding trajectory includes: determining not to activate the lane keeping function if the first collision risk between the vehicle and the obstacle is less than the preset collision risk (or there is no collision risk between the vehicle and the obstacle) and the distance between the vehicle and the obstacle is less than or equal to the preset distance when the vehicle travels along the first guiding trajectory.

In some possible implementations, the obstacle is a large vehicle, for example, a truck or a trailer.

In some possible implementations, determining not to activate the lane keeping function if the distance between the vehicle and the obstacle is less than or equal to the preset distance when the vehicle travels along the first guiding trajectory includes: determining not to activate the lane keeping function if duration for which the distance between the vehicle and the obstacle is less than or equal to the preset distance is greater than or equal to preset duration when the vehicle travels along the first guiding trajectory.

With reference to the first aspect, in some implementations of the first aspect, the lateral active safety function is a lane keeping function. The vehicle is in a first lane. Obtaining the first guiding trajectory includes: obtaining the first guiding trajectory when a distance between the vehicle and a second lane is less than or equal to a first preset distance. Determining, based on the first collision risk and the somatosensory comfort brought to the user when the vehicle travels along the first guiding trajectory, whether to activate the lateral active safety function includes: activating the lane keeping function if a risk of colliding with the obstacle in the second lane when the vehicle travels along a predicted trajectory satisfies a first preset condition and the driver's behavior of stepping on the brake pedal when the vehicle travels along the first guiding trajectory does not satisfy a second preset condition.

The foregoing predicted trajectory may be a trajectory of the vehicle in a future period of time when the driver or lateral active safety function does not intervene.

Based on the foregoing technical solution, the vehicle may activate the lane keeping function if a collision risk between the vehicle and an obstacle in an adjacent lane satisfies a preset condition and the driver's behavior of stepping on the brake pedal does not satisfy the second preset condition. This can avoid the collision risk between the vehicle and the obstacle in the adjacent lane caused by not activating the lane keeping function, although the driver may brake the vehicle after the lane keeping function is activated (which affects the somatosensory comfort of the user), to help improve driving safety of the user.

In some possible implementations, the first preset condition includes that a TTC between the vehicle and the obstacle is less than or equal to a preset TTC when it travels along the predicted trajectory.

In some possible implementations, the second preset condition includes that when the vehicle travels along the first guiding trajectory, a quantity of times that the driver steps on the brake pedal within preset duration is greater than or equal to a preset quantity of times, and/or duration for which the driver steps on the brake pedal within preset duration is greater than or equal to preset duration, and/or a position change rate of the brake pedal within preset duration is greater than or equal to a preset position change rate.

With reference to the first aspect, in some implementations of the first aspect, before determining, based on the first collision risk incurred when the vehicle travels along the first guiding trajectory, whether to activate the lateral active safety function, the method further includes: obtaining a first predicted trajectory, where the first predicted trajectory is a trajectory predicted for the vehicle when the lateral active safety function is not activated; and determining a second collision risk incurred when the vehicle travels along the first predicted trajectory. Determining, based on the first collision risk incurred when the vehicle travels along the first guiding trajectory, whether to activate the lateral active safety function includes: determining, based on the first collision risk and the second collision risk, whether to activate the lateral active safety function.

Based on the foregoing technical solution, the vehicle may determine, based on the second collision risk incurred when it travels along the first predicted trajectory and the first collision risk incurred when it travels along the first guiding trajectory, whether to activate the lateral active safety function. In this way, whether to activate the lateral active safety function can be determined by comprehensively evaluating the collision risks on the predicted trajectory and the guiding trajectory. This helps reduce a safety risk of the vehicle, to enhance the driving/riding experience of the user.

With reference to the first aspect, in some implementations of the first aspect, determining, based on the first collision risk and the second collision risk, whether to activate the lateral active safety function includes: determining, based on the first collision risk, the second collision risk, and a type of the obstacle, whether to activate the lateral active safety function.

Based on the foregoing technical solution, whether to activate the lateral active safety function is comprehensively determined through the type of the obstacle and the evaluated collision risks on the predicted trajectory and the guiding trajectory. This helps further reduce the safety risk between the vehicle and the obstacle (for example, a vulnerable road user (vulnerable road user, VRU)), to enhance the driving/riding experience of the user.

With reference to the first aspect, in some implementations of the first aspect, the lateral active safety function is an emergency steering function. The vehicle is in a first lane. Determining, based on the first collision risk, the second collision risk, and the type of the obstacle, whether to activate the lateral active safety function includes: determining to activate the emergency steering function if the first collision risk between the vehicle and another vehicle in a second lane satisfies a third preset condition when it travels along the first guiding trajectory and the second collision risk between the vehicle and a VRU in the first lane satisfies a fourth preset condition when it travels along the first predicted trajectory, where the second lane is adjacent to the first lane; or determining not to activate the emergency steering function if the first collision risk between the vehicle and a VRU in the second lane satisfies the third preset condition when it travels along the first guiding trajectory and the second collision risk between the vehicle and another vehicle in the first lane satisfies the fourth preset condition when it travels along the first predicted trajectory.

Based on the foregoing technical solution, when evaluating the collision risks on the guiding trajectory and the predicted trajectory, the vehicle may preferentially avoid a collision between the vehicle and the VRU, to help avoid a safety accident between the vehicle and the VRU.

In some possible implementations, the third preset condition includes that a time to collision between the vehicle and the obstacle is less than or equal to a preset TTC.

In some possible implementations, the fourth preset condition includes that a time to collision between the vehicle and the obstacle is less than or equal to a preset TTC.

With reference to the first aspect, in some implementations of the first aspect, determining, based on the first collision risk and the second collision risk, whether to activate the lateral active safety function includes: inputting a status of the vehicle, a status of the obstacle, the first collision risk, and the second collision risk into a prediction model to obtain an evaluation result. The evaluation result indicates whether to activate the lateral active safety function. The prediction model is obtained through training with sample data. The sample data includes a status of a sample vehicle, a status of a sample obstacle, a risk of colliding with the sample obstacle when the sample vehicle travels along a second guiding trajectory, and a risk of colliding with the sample obstacle when the sample vehicle travels along a second predicted trajectory.

According to a second aspect, this application provides a vehicle lateral control apparatus. The apparatus includes: an obtaining unit, configured to obtain a first guiding trajectory, where the first guiding trajectory is a trajectory obtained after a lateral active safety function is pre-activated; and a determining unit, configured to determine, based on a first collision risk incurred when a vehicle travels along the first guiding trajectory, whether to activate the lateral active safety function.

With reference to the second aspect, in some implementations of the second aspect, the determining unit is specifically configured to determine, based on the first collision risk and somatosensory comfort brought to a user when the vehicle travels along the first guiding trajectory, whether to activate the lateral active safety function. The user is in a cabin of the vehicle. The somatosensory comfort is determined based on a distance between the vehicle and an obstacle and/or a driver's behavior of stepping on a brake pedal.

With reference to the second aspect, in some implementations of the second aspect, the lateral active safety function is a lane keeping function. The vehicle is in a first lane. The first lane includes a first lane line and a second lane line. The obtaining unit is specifically configured to obtain the first guiding trajectory when a distance between the vehicle and the first lane line is less than or equal to a first preset distance. The determining unit is specifically configured to determine not to activate the lane keeping function if the distance between the vehicle and the obstacle is less than or equal to a preset distance when the vehicle travels along the first guiding trajectory. The obstacle is a vehicle straddling the second lane line.

With reference to the second aspect, in some implementations of the second aspect, the lateral active safety function is a lane keeping function. The vehicle is in a first lane. The obtaining unit is specifically configured to obtain the first guiding trajectory when a distance between the vehicle and a second lane is less than or equal to a first preset distance. The determining unit is specifically configured to activate the lane keeping function if a risk of colliding with the obstacle in the second lane when the vehicle travels along a predicted trajectory satisfies a first preset condition and the driver's behavior of stepping on the brake pedal when the vehicle travels along the first guiding trajectory does not satisfy a second preset condition.

With reference to the second aspect, in some implementations of the second aspect, the obtaining unit is further configured to obtain a first predicted trajectory. The first predicted trajectory is a trajectory predicted for the vehicle when the lateral active safety function is not activated. The determining unit is further configured to determine a second collision risk incurred when the vehicle travels along the first predicted trajectory. The determining unit is specifically configured to determine, based on the first collision risk and the second collision risk, whether to activate the lateral active safety function.

With reference to the second aspect, in some implementations of the second aspect, the determining unit is specifically configured to determine, based on the first collision risk, the second collision risk, and a type of the obstacle, whether to activate the lateral active safety function.

With reference to the second aspect, in some implementations of the second aspect, the lateral active safety function is an emergency steering function. The vehicle is in a first lane. The determining unit is specifically configured to: determine to activate the emergency steering function if the first collision risk between the vehicle and another vehicle in a second lane satisfies a third preset condition and the second collision risk between the vehicle and a VRU in the first lane satisfies a fourth preset condition, where the second lane is adjacent to the first lane; or determine not to activate the emergency steering function if the first collision risk between the vehicle and a VRU in the second lane satisfies the third preset condition and the second collision risk between the vehicle and another vehicle in the first lane satisfies the fourth preset condition.

With reference to the second aspect, in some implementations of the second aspect, the determining unit is specifically configured to input a status of the vehicle, a status of the obstacle, the first collision risk, and the second collision risk into a prediction model to obtain an evaluation result. The evaluation result indicates whether to activate the lateral active safety function. The prediction model is obtained through training with sample data. The sample data includes a status of a sample vehicle, a status of a sample obstacle, a risk of colliding with the sample obstacle when the sample vehicle travels along a second guiding trajectory, and a risk of colliding with the sample obstacle when the sample vehicle travels along a second predicted trajectory.

According to a third aspect, this application provides a vehicle lateral control apparatus. The apparatus includes a processor and a memory. The memory is configured to store instructions. The processor executes the instructions stored in the memory, to enable the apparatus to perform the method according to any possible implementation of the first aspect.

According to a fourth aspect, this application provides a vehicle. The vehicle includes the apparatus according to any possible implementation of the second aspect or the third aspect.

According to a fifth aspect, this application provides a computer program product. The computer program product includes computer program code. When the computer program code is run on a computer, the computer is enabled to perform the method according to any possible implementation of the first aspect.

It should be noted that the computer program code may be completely or partially stored in a first storage medium. The first storage medium may be encapsulated with a processor, or may be encapsulated separately from the processor. This is not specifically limited in embodiments of this application.

According to a sixth aspect, this application provides a computer-readable storage medium. The computer-readable storage medium stores program code. When the computer program code is run on a computer, the computer is enabled to perform the method according to any possible implementation of the first aspect.

According to a seventh aspect, this application provides a chip system. The chip system includes a processor, configured to invoke a computer program or computer instructions stored in a memory, to enable the processor to perform the method according to any possible implementation of the first aspect.

With reference to the seventh aspect, in a possible implementation, the processor is coupled to the memory through an interface.

With reference to the seventh aspect, in a possible implementation, the chip system further includes the memory. The memory stores the computer program or the computer instructions.

According to an eighth aspect, this application provides a chip. The chip system includes a circuit. The circuit is configured to perform the method according to any possible implementation of the first aspect.

### BRIEF DESCRIPTION OF DRAWINGS

FIG. 1 is a functional block diagram of a vehicle according to an embodiment of this application;
FIG. 2 is a block diagram of an advanced driver-assistance system ADAS according to an embodiment of this application;
FIG. 3 is a schematic flowchart of a method for activating a lateral active safety function according to an embodiment of this application;
FIG. 4 is a diagram of an application scenario according to an embodiment of this application;
FIG. 5 is a diagram of another application scenario according to an embodiment of this application;
FIG. 6 is a diagram of another application scenario according to an embodiment of this application;
FIG. 7 is a diagram of another application scenario according to an embodiment of this application;
FIG. 8 is a diagram of another application scenario according to an embodiment of this application;
FIG. 9 is a diagram of another application scenario according to an embodiment of this application;
FIG. 10 is a diagram of another application scenario according to an embodiment of this application;
FIG. 11 is a diagram of another application scenario according to an embodiment of this application;
FIG. 12 is a diagram of a prediction model according to an embodiment of this application;
FIG. 13 is a schematic flowchart of a vehicle lateral control method according to an embodiment of this application; and
FIG. 14 is a block diagram of a vehicle lateral control apparatus according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. "At least one" means one or more. For example, "at least one of A and B", similar to "A and/or B", describes an association relationship between associated objects and represents that three relationships may exist. For example, at least one of A and B may represent the following three cases: Only A exists, both A and B exist, and only B exists.

In embodiments of this application, prefix words such as "first" and "second" are used only to distinguish different described objects, and do not limit locations, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in descriptions of embodiments, unless otherwise specified, "a plurality of" means two or more.

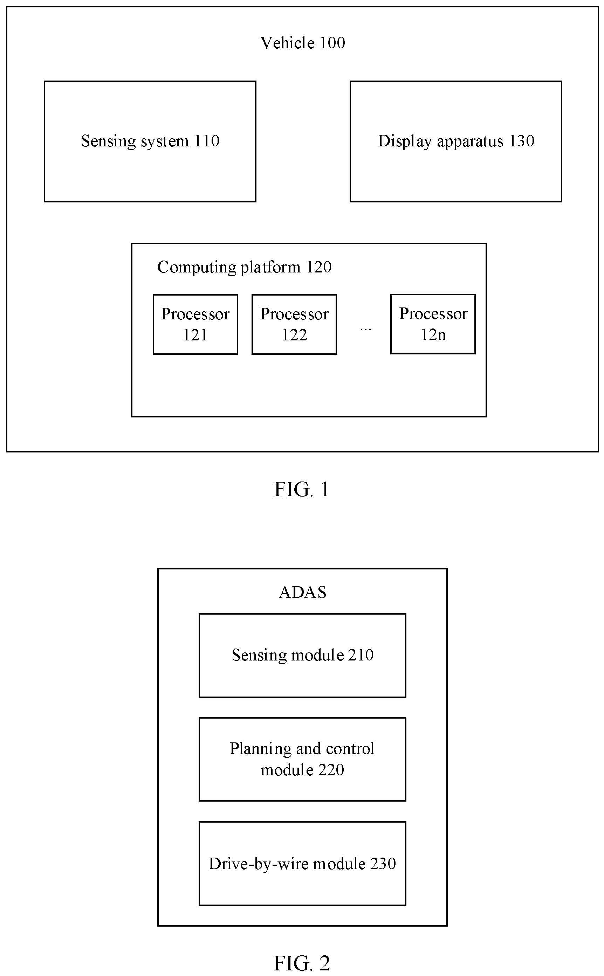

FIG. 1 is a functional block diagram of a vehicle 100 according to an embodiment of this application. The vehicle 100 may include a sensing system 110, a computing platform 120, and a display apparatus 130. The sensing system 110 may include one or more sensors that sense information about an environment around the vehicle 100. For example, the sensing system 110 may include a positioning system. The positioning system may be a global positioning system (global positioning system, GPS), a BeiDou system, or another positioning system. For another example, the sensing system 110 may include one or more of an inertial measurement unit (inertial measurement unit, IMU), an acceleration sensor, a lidar, a millimeter-wave radar, an ultrasonic radar, and an image shooting apparatus. For example, the acceleration sensor may include a sensor configured to detect an acceleration signal of an air suspension system, or may include a sensor configured to detect an acceleration signal of ESC.

Some or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions. Some or all of the processors 121 to 12n may invoke the instructions in the memory, to implement a corresponding function.

The display apparatus 130 in a cabin is mainly classified into two types: a first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cabin, for example, a digital dashboard display, a central display, a display in front of a passenger in a front passenger seat (also referred to as a front-seat passenger), a display in front of a rear-seat passenger on the left, and a display in front of a rear-seat passenger on the right. Even a window may be used as a display for display. The head-up display, also referred to as a head-up display system, is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system. It should be understood that the HUD may also have another type of system with technology evolution. This is not limited in this application.

The foregoing display apparatus 130 is described by using the in-vehicle display and the projection display as an example. Embodiments of this application are not limited thereto. For example, the display apparatus 130 may alternatively be a light display or a projection screen.

The vehicle 100 may include an advanced driver-assistance system (advanced driving assistant system, ADAS). The ADAS obtains information from around the vehicle through a plurality of sensors (including but not limited to the lidar, millimeter-wave radar, image shooting apparatus, ultrasonic sensor, global positioning system, and inertial measurement unit) in the vehicle, and analyzes and processes the obtained information for obstacle sensing, object recognition, vehicle positioning, path planning, driver monitoring/reminder, or another function, to improve vehicle driving safety, automation, and comfort.

For example, FIG. 2 is a block diagram of an ADAS according to an embodiment of this application. The ADAS may include three functional modules: a sensing module 210, a planning and control module 220, and a drive-by-wire module 230. The sensing module 210 senses an environment around a vehicle body through a sensor, and inputs corresponding real-time data into the planning and control module 220. The planning and control module 220 pre-activates a lateral active safety function and plans a guiding trajectory of the vehicle 100 based on information obtained by the sensing module 210. The planning and control module 220 may evaluate safety of the guiding trajectory. After the safety evaluation of the guiding trajectory succeeds, the planning and control module 220 may activate the lateral active safety function and send the guiding trajectory to the drive-by-wire module 230. After receiving information about the guiding trajectory from the planning and control module 220, the drive-by-wire module 230 takes a corresponding action, for example, performs lane keeping, emergency steering, or lane departure warning. Alternatively, after the safety evaluation of the guiding trajectory fails, the planning and control module 220 may determine not to activate the lateral active safety function, so as not to send information about the guiding trajectory to the drive-by-wire module 230.

The sensing module 210 may be the foregoing sensing system 110. The planning and control module 220 may be in the foregoing computing platform 120.

At different autonomous driving levels (L0 to L5), the ADAS may implement different levels of autonomous driving assistance based on information obtained through an artificial intelligence algorithm and a plurality of sensors. The autonomous driving levels (L0 to L5) are based on a grading standard of the society of automotive engineers (society of automotive engineers, SAE). L0 indicates no automation, L1 indicates driving support, L2 indicates partial automation, L3 indicates conditional automation, L4 indicates high automation, and L5 indicates full automation. Tasks of monitoring and responding to road conditions at the levels L1 to L3 are jointly completed by a driver and a system, and the driver needs to take over a dynamic driving task. The levels L4 and L5 enable the driver to be completely transformed into a passenger.

As mentioned above, when a vehicle encounters an unexpected risk, a lateral active safety function (if equipped) intervenes if a condition is satisfied, to avoid or reduce injury. Lateral displacement may occur when the lateral active safety function intervenes to guide the vehicle to a specified location. In some scenarios, activating the lateral active safety function does not align with a user's expectation, resulting in unsatisfactory driving/riding experience.

For example, if a stationary vehicle is in front of the vehicle and the vehicle is deviating toward an adjacent lane, activating a lane keeping function for the vehicle may entail a secondary safety risk between the vehicle and the stationary vehicle.

For example, when a large vehicle intrudes into the vehicle's lane, the vehicle deviates toward a lane line (or a road edge) on a side away from the large vehicle. In this case, activating a lane keeping function for the vehicle may make a driver feel uncomfortable and oppressed.

Through research by technical personnel of this application, it is found that the conventional technology lacks a safety evaluation process for a guiding trajectory obtained after a lateral active safety function is activated, which may lead to the following problems:
(1) A vehicle may have a risk of colliding with another road user when traveling along the guiding trajectory.
(2) The guiding trajectory may violate a driver's intention, making the driver feel uncomfortable and oppressed.

Based on the foregoing research, embodiments of this application provide a lateral control method. Safety of a guiding trajectory obtained after a lateral active safety function is pre-activated is evaluated to determine whether to activate the lateral active safety function. In this way, a safety evaluation result of the guiding trajectory is used to determine whether to activate the lateral active safety function. This helps avoid a secondary safety risk between a vehicle and an obstacle and improve somatosensory comfort of a user, to enhance driving/riding experience of the user.

For example, the safety evaluation of the guiding trajectory includes but is not limited to the following two aspects:
(1) Whether the vehicle has a risk of colliding with another road user when traveling along the guiding trajectory.
(2) Whether a driver clearly feels uncomfortable and oppressed when the vehicle travels along the guiding trajectory.

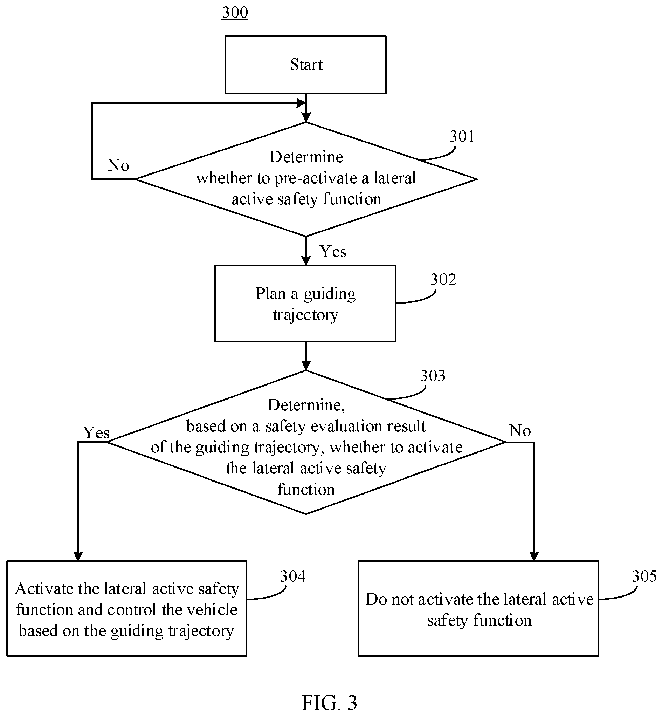

FIG. 3 is a schematic flowchart of a method 300 for activating a lateral active safety function according to an embodiment of this application. The method 300 may be performed by the foregoing vehicle 100 or the foregoing planning and control module 220. The following uses an example in which it is performed by the vehicle 100 for description. The method 300 includes the following steps.

S301: Determine, based on at least one of a status of an obstacle, a status of the vehicle 100, and road structure information, whether to pre-activate the lateral active safety function.

For example, the status of the obstacle includes one or more of a location, a speed, an acceleration, and a heading angle of the obstacle.

For example, the obstacle may include another vehicle and a VRU. For example, the VRU includes but is not limited to a pedestrian, a cyclist, or an electric bicycle user.

For example, the status of the vehicle 100 includes one or more of a location, a speed, an acceleration, and a heading angle of the vehicle 100.

For example, the road structure information may include information about a lane line, such as a relative location relationship between the vehicle 100 and the lane line, and a type (for example, a solid line or a broken line) of the lane line.

If it is determined based on at least one of the status of the obstacle, the status of the vehicle 100, and the road structure information to pre-activate the lateral active safety function, S302 may be performed. Otherwise, S301 continues to be performed.

The foregoing trigger condition for pre-activating the lateral active safety function is merely an example. This is not specifically limited in this application.

Pre-activating the lateral active safety function above may be understood as that the lateral active safety function is not really activated. A purpose of pre-activating the lateral active safety function is to enable the foregoing planning and control module 220 to plan a guiding trajectory. The vehicle 100 may determine, based on a safety evaluation result of the guiding trajectory, whether to activate the lateral active safety function.

Activating the lateral active safety function above may be understood as that the vehicle 100 controls vehicle driving based on the guiding trajectory.

S302: Plan a guiding trajectory when it is determined to pre-activate the lateral active safety function.

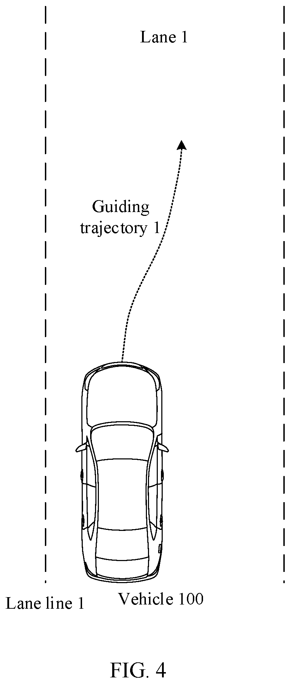

For example, FIG. 4 is a diagram of an application scenario according to an embodiment of this application. When a distance between a left tire of the vehicle 100 and a lane line 1 is less than or equal to a preset distance, the vehicle 100 may pre-activate an LKA function or an ELKA function. In this case, the vehicle 100 may plan a guiding trajectory 1.

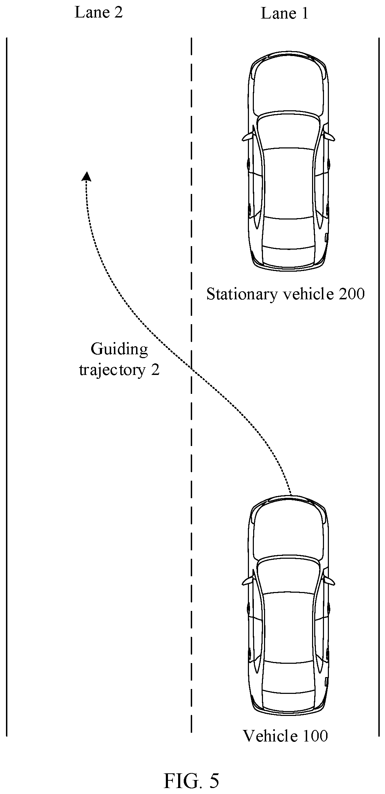

For example, FIG. 5 is a diagram of another application scenario according to an embodiment of this application. When the vehicle 100 at a high speed determines that there is a risk of colliding with a stationary vehicle 200 in a same lane (for example, a lane 1), the vehicle 100 may pre-activate an ESA function. In this case, the vehicle 100 may plan a guiding trajectory 2.

That the vehicle 100 pre-activates the lateral active safety function (for example, ELKA or ESA) and plans the guiding trajectory above does not mean that the vehicle 100 immediately travels based on the planned guiding trajectory. The vehicle 100 may first evaluate safety of the guiding trajectory. When an evaluation result satisfies a condition, the vehicle 100 activates the lateral active safety function, to travel based on the guiding trajectory.

S303: The vehicle 100 determines, based on a safety evaluation result of the guiding trajectory, whether to activate the lateral active safety function.

If the vehicle 100 determines to activate the lateral active safety function, S304 is performed. Otherwise, S305 is performed.

Optionally, that the vehicle 100 evaluates the safety of the guiding trajectory includes: The vehicle 100 evaluates a collision risk incurred when the vehicle 100 travels along the guiding trajectory, and/or evaluates experience comfort brought to a user when it travels along the guiding trajectory (or evaluates whether a driver's intention is violated).

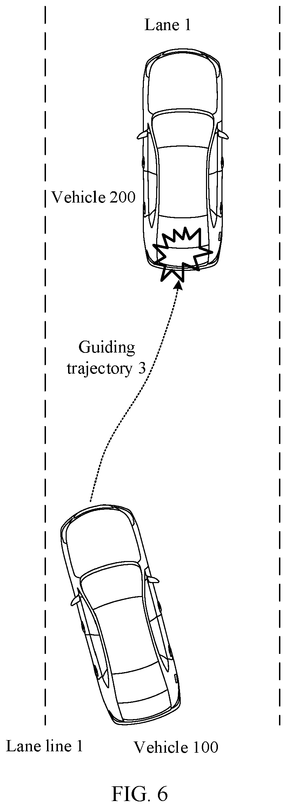

For example, FIG. 6 is a diagram of another application scenario according to an embodiment of this application. When a distance between the vehicle 100 at a high speed and a lane line 1 is less than or equal to a preset distance, the vehicle 100 pre-activates an LKA function and plans a guiding trajectory 3. If the vehicle 100 determines, in a process of evaluating safety of the guiding trajectory 3, that there is a risk of colliding with a vehicle 200 at a low speed in a same lane 1 when it travels based on the guiding trajectory 3, the vehicle 100 may determine that the safety evaluation of the guiding trajectory 3 fails, or may determine that the guiding trajectory 3 is risky. In this case, the vehicle 100 may not activate the LKA function.

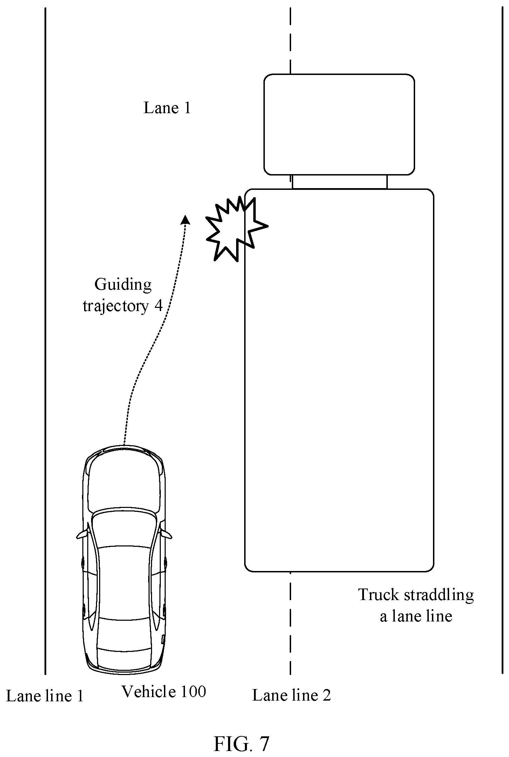

For example, FIG. 7 is a diagram of another application scenario according to an embodiment of this application. When a distance between the vehicle 100 and a lane line 1 is less than or equal to a preset distance, the vehicle 100 pre-activates an LKA function and plans a guiding trajectory 4. In a process of evaluating safety of the guiding trajectory 4, the vehicle 100 determines that there is an excessively short distance to a truck straddling a lane line 2 when it travels based on the guiding trajectory 4. This may make a user in a cabin feel uncomfortable and oppressed. The vehicle 100 may determine that the safety evaluation of the guiding trajectory 4 fails, or may determine that the guiding trajectory 4 violates the driver's intention (or makes the user feel uncomfortable and oppressed). In this case, the vehicle 100 may determine not to activate the LKA function.

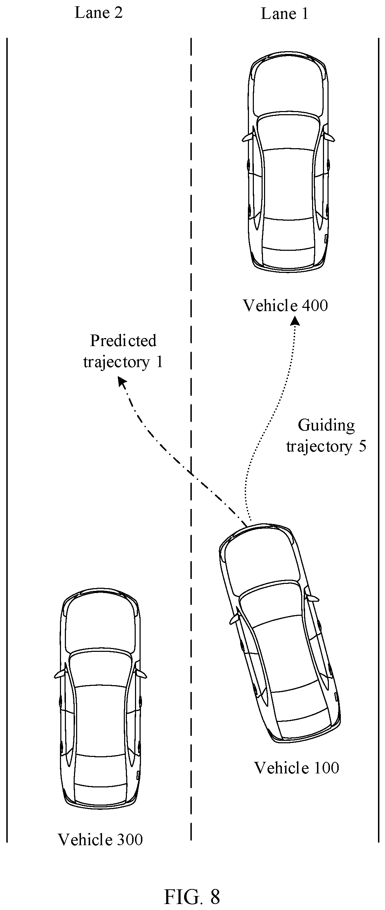

For example, FIG. 8 is a diagram of another application scenario according to an embodiment of this application. The vehicle 100 at a low speed deviates to a lane 2 along a predicted trajectory 1 based on a current vehicle speed and heading angle when the driver or lateral active safety function does not intervene. When the vehicle 100 determines that there is a risk of colliding with a left-rear fast-approaching vehicle (a vehicle 300), the vehicle 100 may pre-activate an ELKA function and plan a guiding trajectory 5. If the vehicle 100 determines, in a process of evaluating safety of the guiding trajectory 5, that there is no risk of colliding with a vehicle 400 at a high speed in a lane 1 when it travels based on the guiding trajectory 5, the vehicle 100 may determine that the safety evaluation of the guiding trajectory 5 succeeds, or that there is a collision risk when the vehicle 100 deviates to the lane 2. In this case, the vehicle 100 may activate the ELKA function.

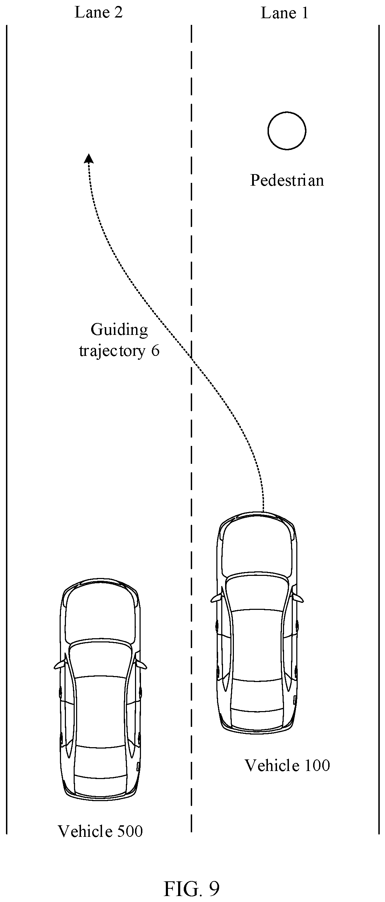

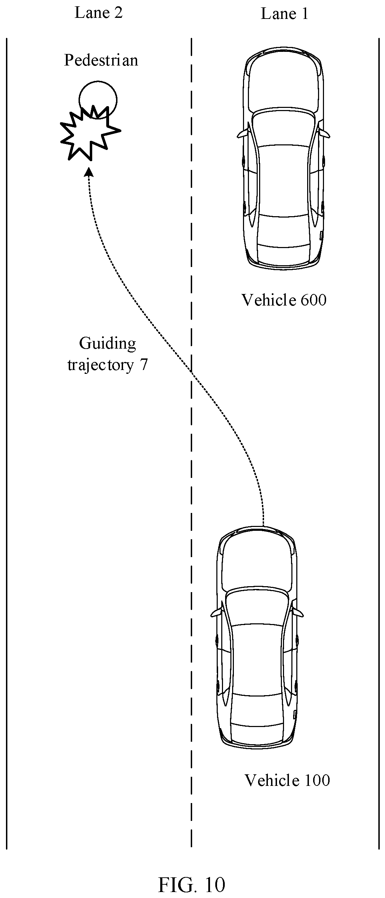

The foregoing describes, through FIG. 6 to FIG. 8, application scenarios of whether to activate a lane keeping function. The following describes, with reference to FIG. 9 and FIG. 10, application scenarios of whether to activate an emergency steering function.

For example, as shown in FIG. 5, in a process of evaluating safety of the guiding trajectory 2, the vehicle 100 determines that there is no collision risk when it travels based on the guiding trajectory 2, and may determine that the safety evaluation of the guiding trajectory 2 succeeds, or that there is no collision risk when the vehicle 100 deviates to a lane 2. In this case, the vehicle 100 may activate the ESA function.

For example, FIG. 9 is a diagram of another application scenario according to an embodiment of this application. When the vehicle 100 at a high speed determines that there is a risk of colliding with a pedestrian ahead, the vehicle 100 may pre-activate an ESA function. In this case, the vehicle 100 may plan a guiding trajectory 6. If the vehicle 100 determines, in a process of evaluating safety of the guiding trajectory 6, that there is no risk of colliding with a vehicle 500 at a low speed in a lane 2 when it travels based on the guiding trajectory 6, the vehicle 100 may activate the ESA function.

For example, FIG. 10 is a diagram of another application scenario according to an embodiment of this application. When the vehicle 100 at a high speed determines that there is a risk of colliding with a stationary vehicle 600 ahead, the vehicle 100 may pre-activate an ESA function. In this case, the vehicle 100 may plan a guiding trajectory 7. If the vehicle 100 determines, in a process of evaluating safety of the guiding trajectory 7, that there is a risk of colliding with a pedestrian in a lane 2 when it travels based on the guiding trajectory 7, the vehicle 100 may not activate the ESA function. When the ESA function is not activated, the driver in the vehicle 100 may avoid colliding with the vehicle 600 by stepping on a brake pedal (or the vehicle 100 may avoid colliding with the vehicle 600 by triggering a longitudinal active safety function). Although experience comfort of a user in a cabin may be affected, a safety accident between the vehicle 100 and the pedestrian that occurs after the ESA function is activated can be avoided.

S304: The vehicle 100 activates the lateral active safety function, and controls the vehicle 100 based on the guiding trajectory.

S305: The vehicle 100 does not activate the lateral active safety function.

In embodiments of this application, the safety evaluation of the guiding trajectory is introduced in a process of determining whether to activate the lateral active safety function, to continuously evaluate the safety of the guiding trajectory. When the guiding trajectory has a safety risk, current activation of the lateral active safety function can be suppressed, to help avoid a secondary safety risk caused by activating the lateral active safety function and enhance driving/riding experience of the user.

Compared with a conventional lateral active safety function, a lateral active safety function based on safety evaluation not only considers a risk of a vehicle without intervention, but also evaluates a risk due to intervention. It is particularly important to identify a driver's intention, accurately predict a vehicle's trajectory, and identify a key risky target on a guiding trajectory.

For example, a target attribute cost *Cost* for safety evaluation may be expressed as a formula (1): $Cost = {w}_{1} ∗ {cost}_{1} + {w}_{2} ∗ {cost}_{2} + {w}_{3} ∗ {cost}_{3} + {w}_{4} ∗ {cost}_{4}$ (1)

*cost*₁ is a cost of a driving intention. *cost*₂ is a cost of a collision risk. *cost*₃ is a cost of a somatosensory comfort indicator. *cost*₄ is costs of different risk scenarios. *w*₁, *w*₂, *w*₃, and *w*₄ are corresponding weights.

A higher target attribute cost *Cost* for safety evaluation indicates a lower probability that the vehicle 100 activates the lateral active safety function. A lower target attribute cost *Cost* for safety evaluation indicates a higher probability that the vehicle 100 activates the lateral active safety function.

Optionally, if the target attribute cost for safety evaluation is greater than a preset threshold, it may be determined not to activate the lateral active safety function; or if the target attribute cost for safety evaluation is less than or equal to the preset threshold, it may be determined to activate the lateral active safety function. In practice, the preset threshold may be determined based on a data regression status.

For example, if the guiding trajectory planned when the lateral active safety function is pre-activated is inconsistent with the driver's intention, the cost of the driver's intention is higher. Otherwise, the cost of the driver's intention is lower.

For example, if the guiding trajectory planned when the lateral active safety function is pre-activated has a higher risk of colliding with a safety evaluation target (or the obstacle), the cost of the collision risk is higher. Otherwise, the cost of the collision risk is lower.

For example, if the guiding trajectory planned when the lateral active safety function is pre-activated brings somatosensory discomfort to the user in the cabin, the cost of the somatosensory comfort indicator is higher. Otherwise, the cost of the somatosensory comfort indicator is lower.

For example, different risk scenarios may correspond to different costs of risk scenarios.

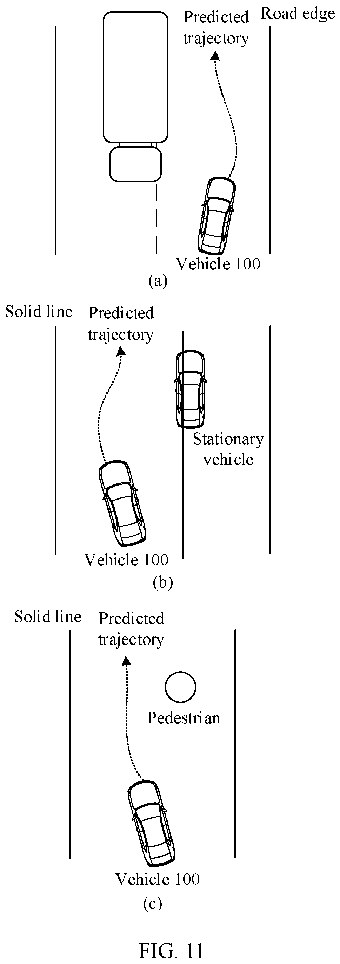

For example, FIG. 11 is a diagram of three application scenarios according to an embodiment of this application. The three application scenarios are a large-vehicle oppression scenario shown in (a) in FIG. 11, a parking intrusion scenario shown in (b) in FIG. 11, and a VRU scenario shown in (c) in FIG. 11. A cost of the VRU scenario is greater than a cost of the large-vehicle oppression scenario. The cost of the large-vehicle oppression scenario is greater than a cost of the parking intrusion scenario.

For example, different costs may alternatively exist for a same risk scenario.

For example, for the large-vehicle oppression scenarios shown in (a) in FIG. 11 and

FIG. 7, the vehicle 100 and a truck travel in opposite directions in the scenario shown in (a) in FIG. 11, and the vehicle 100 and the truck travel in a same direction in the scenario shown in FIG. 7. Considering a relative speed at a time of collision, a cost of the large-vehicle intrusion scenario shown in (a) in FIG. 11 is greater than a cost of the large-vehicle intrusion scenario shown in FIG. 6.

For example, as shown in (a) in FIG. 11, the vehicle 100 may determine, based on current traveling parameters (such as a location, a speed, an acceleration, and a heading angle), a predicted trajectory of the vehicle 100 in a future period of time when no lateral active safety function intervenes. In this case, because a distance between the vehicle 100 and a road edge is less than or equal to a preset distance, the vehicle 100 may pre-activate LKA and plan a guiding trajectory (not shown in the figure). Due to a large deviation between a heading angle indicated by the guiding trajectory and a heading angle indicated by the predicted trajectory, it may be determined that the guiding trajectory is inconsistent with the driver's intention. In this case, the cost of the driver's intention is high. For example, the driver's intention is to drive the vehicle close to the road edge (or avoid the truck), and the guiding trajectory indicates the vehicle to travel in the middle of a lane 1 (or not avoid the truck). The vehicle 100 is excessively close to the truck when traveling based on the guiding trajectory, which may lead to a collision risk and bring experience discomfort to the user. In this case, the cost of the collision risk and the cost of the somatosensory comfort are high. The large-vehicle intrusion scenario in which the vehicle 100 resides is a scenario with a high cost in all scenarios.

Therefore, the target attribute cost for safety evaluation calculated through the formula (1) is high, and the vehicle 100 may not activate the lateral active safety function (for example, ELKA or LKA).

For a working condition in which the function is ELKA and there is a vehicle on a non-deviation side, a predicted trajectory and a deviation condition may be corrected based on the driver's intention, to avoid activating the lane keeping function when the driver consciously deviates. If the lane keeping function is still activated, a weight corresponding to each cost in the formula (1) may be dynamically adjusted in a subsequent safety evaluation process. For example, for the large-vehicle intrusion scenario shown in (a) in FIG. 11, if the vehicle 100 activates ELKA, the weights corresponding to the cost of the collision risk and the cost of the somatosensory comfort indicator for a target on the non-deviation side in safety evaluation may be increased in the subsequent safety evaluation process, so that the target is more easily evaluated as risky, and thus the ELKA function can be deactivated.

For example, as shown in (a) in FIG. 11, when the truck intrudes into the lane of the vehicle 100 and the vehicle 100 deviates toward a solid line or road edge on the other side, the vehicle 100 may tend to determine that the driver actively controls a steering wheel to avoid the truck, and determine that the vehicle 100 actively returns to the center of the lane after completing the avoidance. In this way, the predicted trajectory does not intersect with the road edge, and there is no risk of deviating out of the lane. In this case, the vehicle 100 may determine not to activate the lane keeping function.

The foregoing deviation condition includes but is not limited to a distance between a lane line and a side that is a body of the vehicle 100 and that is close to the lane line, and a time needed for a leading edge of the vehicle to cross the lane line.

The foregoing describes, with reference to the target attribute cost *Cost* for safety evaluation, the process of determining whether to activate the lateral active safety function. Embodiments of this application are not limited thereto. For example, a prediction model may alternatively be used to predict whether to activate the lateral active safety function.

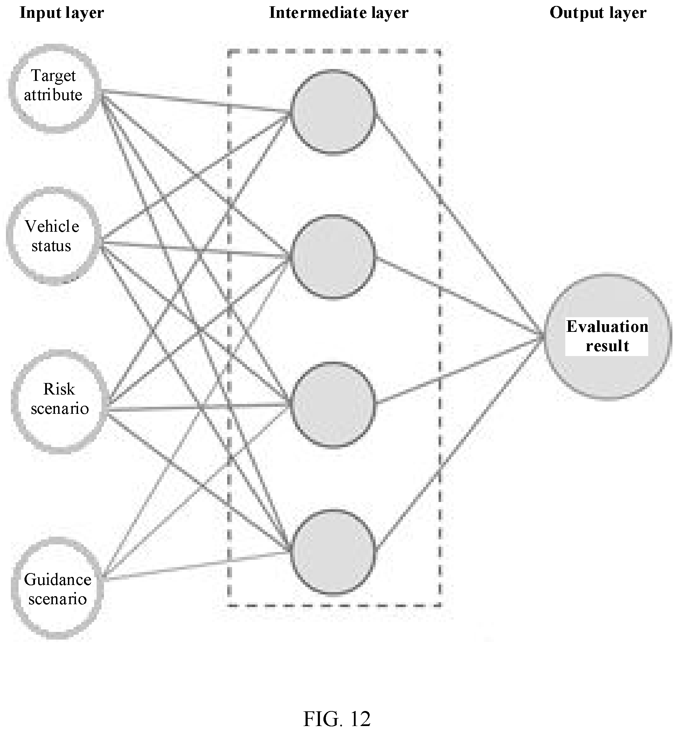

FIG. 12 is a diagram of a prediction model according to an embodiment of this application.

For example, the prediction model may be a residual neural network (residual neural network, ResNet), a recurrent neural network (recurrent neural network, RNN), or a multilayer perceptron (multilayer perceptron, MLP).

For example, the prediction model may alternatively be a machine learning model, such as a support vector machine (support vector machine, SVM).

For example, the prediction model is a lightweight perceptron network model. Through the lightweight perceptron network model, human-like modeling may be performed on a safety evaluation module (a module that evaluates safety of a guiding trajectory), to establish the entire safety evaluation module as a simple neural network classification problem.

In a model training phase, a database may be used to train the model. For different target attributes (or obstacle attributes), risk scenarios, guidance scenarios, and vehicle statuses, decelerations for different guiding trajectories are calibrated, and safety evaluation results of human-like driving are fitted. For example, the safety evaluation result may include activating the lateral active safety function or not activating the lateral active safety function.

For example, the target attributes include types of obstacles, such as a type of an obstacle in a lane of the vehicle 100 and a type of an obstacle in a lane adjacent to the lane, including a large vehicle, a stationary vehicle, a VRU, a common obstacle, and the like.

For example, the risk scenarios include different risks incurred when no intervention is performed on the vehicle 100. For example, different scenarios such as a solid line, a road edge, a vehicle-to-vehicle collision, and a vehicle-to-vehicle dangerous area may be distinguished, to calibrate different deceleration thresholds for collision derivation.

The foregoing vehicle-to-vehicle collision may be understood as determining, through an algorithm, that the vehicle has a risk colliding with another vehicle.

The foregoing vehicle-to-vehicle dangerous area may be understood as determining, through an algorithm, that the vehicle has no collision risk, but may be excessively close to an obstacle. There may also be danger when the vehicle is excessively close to the obstacle. Therefore, the vehicle-to-vehicle dangerous area is a safety net for the vehicle-to-vehicle collision.

For example, the guidance scenarios include different risks faced on the guiding trajectory planned after intervention is performed on the vehicle 100. For example, a vehicle-to-VRU collision, a vehicle-to-vehicle collision, tailgating, and large-vehicle oppression may be distinguished to evaluate post-guidance risks.

For example, the vehicle statuses include the locations, speeds, accelerations, and heading angles of the vehicle 100 and the obstacle, and are used to evaluate risks posed by a guiding action.

In a prediction phase, data collected by a sensor of the vehicle 100 may be used to determine a traveling parameter (for example, one or more of the location, speed, acceleration, and heading angle) of the obstacle, a safety risk incurred when no intervention is performed on the vehicle 100, and a safety risk incurred when intervention is performed on the vehicle 100. The vehicle 100 may input a traveling parameter of the vehicle 100, the traveling parameter of the obstacle, the safety risk incurred when no intervention is performed on the vehicle 100, and the safety risk incurred when intervention is performed on the vehicle 100 into the lightweight perceptron network model, so that a safety evaluation result can be predicted.

The foregoing input of the prediction model is merely an example. This is not limited in embodiments of this application. For example, the prediction model may alternatively perform end-to-end prediction. For example, the vehicle 100 may input raw data collected by a sensor (for example, at least one of a camera, a lidar, or a millimeter-wave radar) into the prediction model, so that an evaluation result can be obtained. The prediction model may be obtained through training with sample data. The sample data includes raw data collected by a sensor of a sample vehicle.

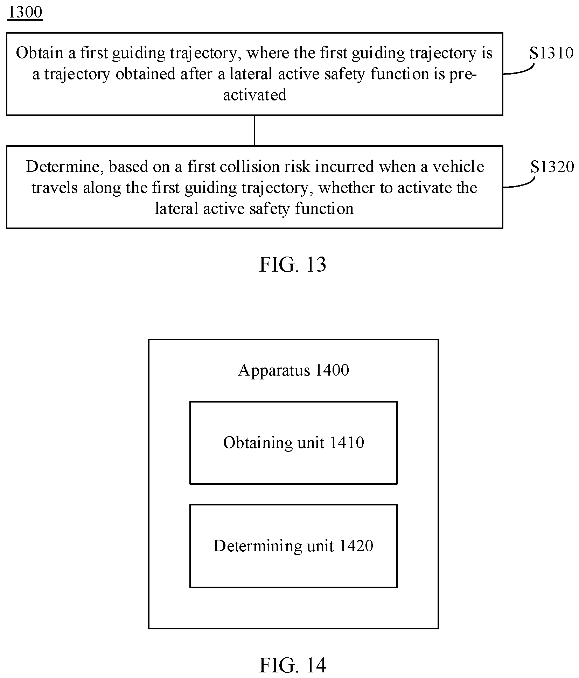

FIG. 13 is a schematic flowchart of a vehicle lateral control method 1300 according to an embodiment of this application. The method 1300 may be performed by the foregoing vehicle 100. Alternatively, the method 1300 may be performed by the foregoing computing platform 120. Alternatively, the method 1300 may be performed by a system including the computing platform 120 and the sensing system 110. Alternatively, the method 1300 may be performed by a system-on-a-chip (system-on-a-chip, SoC) in the computing platform 120. Alternatively, the method 1300 may be performed by a processor, a chip, or a circuit in the computing platform 120. Alternatively, the method 1300 may be performed by the planning and control module 220. The method 1300 includes the following steps.

S1310: Obtain a first guiding trajectory. The first guiding trajectory is a trajectory obtained after a lateral active safety function is pre-activated.

Optionally, obtaining the first guiding trajectory includes: obtaining the first guiding trajectory when a distance between a center line of a vehicle and a center line of a lane line is greater than or equal to a preset distance. The first guiding trajectory is a guiding trajectory planned after an LKA or ELKA function is pre-activated.

Optionally, obtaining the first guiding trajectory includes: obtaining the first guiding trajectory when a collision risk between a vehicle and an obstacle ahead is greater than or equal to a preset collision risk. The first guiding trajectory is a guiding trajectory planned after an AES or ESA function is pre-activated.

Pre-activating the lateral active safety function above may be understood as that the lateral active safety function is not activated yet. A purpose of pre-activating the lateral active safety function is to plan a guiding trajectory for the vehicle, so as to evaluate safety of the guiding trajectory. The vehicle may determine, based on a safety evaluation result of the guiding trajectory, whether to activate the lateral active safety function.

S1320: Determine, based on a first collision risk incurred when a vehicle travels along the first guiding trajectory, whether to activate the lateral active safety function.

Optionally, determining, based on the first collision risk incurred when the vehicle travels along the first guiding trajectory, whether to activate the lateral active safety function includes: if the first collision risk incurred when the vehicle travels along the first guiding trajectory is greater than a preset collision risk, determining not to activate the lateral active safety function; or if the first collision risk incurred when the vehicle travels along the first guiding trajectory is less than or equal to the preset collision risk, determining not to activate the lateral active safety function.

Optionally, the method 1300 further includes: determining the first collision risk based on a TTC between the vehicle and an obstacle when the vehicle travels along the first guiding trajectory.

For example, as shown in FIG. 6, if the vehicle 100 determines, in the process of evaluating the safety of the guiding trajectory 1, that a TTC between the vehicle 100 and the vehicle 200 at a low speed in the same lane 1 when it travels based on the guiding trajectory 3 is less than or equal to a preset TTC, the vehicle 100 may determine that the safety evaluation of the guiding trajectory 3 fails, or may determine that the guiding trajectory 3 is risky. In this case, the vehicle 100 may not activate the ELKA function.

Optionally, determining, based on the first collision risk incurred when the vehicle travels along the first guiding trajectory, whether to activate the lateral active safety function includes: determining, based on the first collision risk and somatosensory comfort brought to a user when the vehicle travels along the first guiding trajectory, whether to activate the lateral active safety function. The user is in a cabin of the vehicle.

For example, the somatosensory comfort may be determined based on a distance between the vehicle and an obstacle and/or a driver's behavior of stepping on a brake pedal.

Optionally, determining, based on the first collision risk and the somatosensory comfort brought to the user when the vehicle travels along the first guiding trajectory, whether to activate the lateral active safety function includes: determining, based on a first weight, a second weight, the first collision risk, and the somatosensory comfort brought to the user when the vehicle travels along the first guiding trajectory, whether to activate the lateral active safety function. The first weight is a weight corresponding to the first collision risk. The second weight is a weight corresponding to the somatosensory comfort. The first weight is greater than the second weight.

For example, a target attribute cost *Cost* for safety evaluation may be expressed as a formula (2): $Cost = {w}_{2} ∗ {cost}_{2} + {w}_{3} ∗ {cost}_{3}$ (2)

*cost*₂ is a cost of a collision risk. *cost*₃ is a cost of a somatosensory comfort indicator. *w*₂ and *w*₃ are corresponding weights.

For example, *w*₂ is greater than *w*₃.

Optionally, the lateral active safety function is a lane keeping function. The vehicle is in a first lane. The first lane includes a first lane line and a second lane line. Obtaining the first guiding trajectory includes: obtaining the first guiding trajectory when a distance between the vehicle and the first lane line is less than or equal to a first preset distance. Determining, based on the first collision risk and the somatosensory comfort brought to the user when the vehicle travels along the first guiding trajectory, whether to activate the lateral active safety function includes: determining not to activate the lane keeping function if the distance between the vehicle and the obstacle is less than or equal to a preset distance when the vehicle travels along the first guiding trajectory. The obstacle is a vehicle straddling the second lane line.

For example, the lane keeping function may include LKA or ELKA.

Optionally, determining not to activate the lane keeping function if the distance between the vehicle and the obstacle is less than or equal to the preset distance when the vehicle travels along the first guiding trajectory includes: determining not to activate the lane keeping function if the first collision risk between the vehicle and the obstacle is less than the preset collision risk (or there is no collision risk between the vehicle and the obstacle) and the distance between the vehicle and the obstacle is less than or equal to the preset distance when the vehicle travels along the first guiding trajectory.

For example, as shown in FIG. 7, when the vehicle 100 determines to travel based on the guiding trajectory 4 in the process of evaluating the safety of the guiding trajectory 4, a TTC between the vehicle 100 and the truck is greater than a preset TTC, and a distance between the vehicle 100 and the truck is less than or equal to the preset distance. Although there may be no collision risk, the user in the cabin may feel uncomfortable and oppressed. The vehicle 100 may determine that the safety evaluation of the guiding trajectory 4 fails. In this case, the vehicle 100 may determine not to activate the ELKA function.

Optionally, determining not to activate the lane keeping function if the distance between the vehicle and the obstacle is less than or equal to the preset distance when the vehicle travels along the first guiding trajectory includes: determining not to activate the lane keeping function if duration for which the distance between the vehicle and the obstacle is less than or equal to the preset distance is greater than or equal to preset duration when the vehicle travels along the first guiding trajectory.

Optionally, the lateral active safety function is a lane keeping function. The vehicle is in a first lane. Obtaining the first guiding trajectory includes: obtaining the first guiding trajectory when a distance between the vehicle and a second lane is less than or equal to a first preset distance. Determining, based on the first collision risk and the somatosensory comfort brought to the user when the vehicle travels along the first guiding trajectory, whether to activate the lateral active safety function includes: activating the lane keeping function if a risk of colliding with the obstacle in the second lane when the vehicle travels along a predicted trajectory satisfies a first preset condition and the driver's behavior of stepping on the brake pedal when the vehicle travels along the first guiding trajectory does not satisfy a second preset condition.

The foregoing predicted trajectory may be a predicted trajectory of the vehicle in a future period of time when the lateral active safety function does not intervene.

For example, as shown in FIG. 8, the vehicle 100 may be a vehicle at a high speed, the vehicle 300 may be a vehicle at a high speed, and the vehicle 400 may be a vehicle at a low speed. The vehicle 100 may activate the ELKA function if it determines, in the process of evaluating the safety of the guiding trajectory 5, that a TTC between the vehicle 100 and the vehicle 300 in the lane 2 is less than or equal to a preset TTC when it travels based on the predicted trajectory 1 and that the driver needs to step on the brake pedal to avoid a risk of colliding with the vehicle 400 when it travels based on the guiding trajectory 1. The user in the cabin may feel uncomfortable because the driver needs to step on the brake pedal to avoid colliding with the vehicle 400 when driving along the guiding trajectory 5. However, this can avoid colliding with the vehicle 300 when the vehicle 100 travels along the predicted trajectory 1, to help avoid a safety accident of the vehicle 100.

Optionally, before determining, based on the first collision risk incurred when the vehicle travels along the first guiding trajectory, whether to activate the lateral active safety function, the method further includes: obtaining a first predicted trajectory, where the first predicted trajectory is a trajectory predicted for the vehicle when the lateral active safety function is not activated; and determining a second collision risk incurred when the vehicle travels along the first predicted trajectory. Determining, based on the first collision risk incurred when the vehicle travels along the first guiding trajectory, whether to activate the lateral active safety function includes: determining, based on the first collision risk and the second collision risk, whether to activate the lateral active safety function.

For example, as shown in (a) to (c) in FIG. 11, the vehicle 100 may comprehensively consider, based on a collision risk incurred when the vehicle 100 travels along the predicted trajectory and a collision risk incurred when the vehicle 100 travels along the guiding trajectory, whether to activate the lateral active safety function.

Optionally, determining, based on the first collision risk and the second collision risk, whether to activate the lateral active safety function includes: determining, based on the first collision risk, the second collision risk, and a type of the obstacle, whether to activate the lateral active safety function.

For example, as shown in FIG. 10, an example in which the lateral active safety function is ESA is used. The vehicle 100 may comprehensively consider a type of an obstacle in the lane 2 when traveling based on the guiding trajectory 7 and a type of an obstacle in the lane 1 when traveling based on the predicted trajectory, to determine whether to activate ESA.

Optionally, the lateral active safety function is an emergency steering function. The vehicle is in a first lane. Determining, based on the first collision risk, the second collision risk, and the type of the obstacle, whether to activate the lateral active safety function includes: determining to activate the emergency steering function if the first collision risk between the vehicle and another vehicle in a second lane satisfies a third preset condition and the second collision risk between the vehicle and a vulnerable road user VRU in the first lane satisfies a fourth preset condition, where the second lane is adjacent to the first lane; or determining not to activate the emergency steering function if the first collision risk between the vehicle and a VRU in the second lane satisfies the third preset condition and the second collision risk between the vehicle and another vehicle in the first lane satisfies the fourth preset condition.

The third preset condition and the fourth preset condition may be that a TTC between the vehicle and the obstacle is less than or equal to a preset TTC.

Alternatively, for different types of obstacles, the third preset condition and the fourth preset condition may be different.

For example, if the obstacle is a VRU (such as a pedestrian), the preset condition may be that a TTC between the vehicle and the VRU is less than or equal to a first preset TTC.

For another example, if the obstacle is another vehicle, the preset condition may be that a TTC between the vehicle and the another vehicle is less than or equal to a second preset TTC. The first preset TTC is greater than the second preset TTC.

For example, as shown in FIG. 9, the vehicle 100 is a vehicle at a high speed, and the vehicle 500 is a vehicle at a high speed. The vehicle 100 may determine to activate the emergency steering function if a TTC between the vehicle 100 and the vehicle 500 is less than or equal to the preset TTC when it travels along the guiding trajectory 6 and a TTC between the vehicle 100 and the pedestrian is less than or equal to the preset TTC when it travels along a predicted trajectory (not shown in the figure). This can avoid a safety accident between the vehicle and the pedestrian in the lane 1.

For example, as shown in FIG. 10, the vehicle 100 is a vehicle at a high speed, and the vehicle 600 is a stationary vehicle. The vehicle 100 may determine not to activate the emergency steering function if a TTC between the vehicle 100 and the pedestrian in the lane 2 is less than or equal to the preset TTC when it travels along the guiding trajectory 7 and a TTC between the vehicle 100 and the vehicle 600 is less than or equal to the preset TTC when it travels along a predicted trajectory (not shown in the figure). This can avoid a safety accident between the vehicle and the pedestrian in the lane 2.

Optionally, determining, based on the first collision risk and the second collision risk, whether to activate the lateral active safety function includes: inputting a status of the vehicle, a status of the obstacle, the first collision risk, and the second collision risk into a prediction model to obtain an evaluation result. The evaluation result indicates whether to activate the lateral active safety function. The prediction model is obtained through training with sample data. The sample data includes a status of a sample vehicle, a status of a sample obstacle, a risk of colliding with the sample obstacle when the sample vehicle travels along a second guiding trajectory, and a risk of colliding with the sample obstacle when the sample vehicle travels along a second predicted trajectory.

FIG. 14 is a block diagram of a vehicle lateral control apparatus 1400 according to an embodiment of this application. As shown in FIG. 14, the apparatus 1400 includes: an obtaining unit 1410, configured to obtain a first guiding trajectory, where the first guiding trajectory is a trajectory obtained after a lateral active safety function is pre-activated; and a determining unit 1420, configured to determine, based on a first collision risk incurred when a vehicle travels along the first guiding trajectory, whether to activate the lateral active safety function.

Optionally, the determining unit 1420 is specifically configured to determine, based on the first collision risk and somatosensory comfort brought to a user when the vehicle travels along the first guiding trajectory, whether to activate the lateral active safety function. The user is in a cabin of the vehicle. The somatosensory comfort is determined based on a distance between the vehicle and an obstacle and/or a driver's behavior of stepping on a brake pedal.

Optionally, the lateral active safety function is a lane keeping function. The vehicle is in a first lane. The first lane includes a first lane line and a second lane line. The obtaining unit 1410 is specifically configured to obtain the first guiding trajectory when a distance between the vehicle and the first lane line is less than or equal to a first preset distance. The determining unit 1420 is specifically configured to determine not to activate the lane keeping function if the distance between the vehicle and the obstacle is less than or equal to a preset distance when the vehicle travels along the first guiding trajectory. The obstacle is a vehicle straddling the second lane line.

Optionally, the lateral active safety function is a lane keeping function. The vehicle is in a first lane. The obtaining unit 1410 is specifically configured to obtain the first guiding trajectory when a distance between the vehicle and a second lane is less than or equal to a first preset distance. The determining unit 1420 is specifically configured to activate the lane keeping function if a risk of colliding with the obstacle in the second lane when the vehicle travels along a predicted trajectory satisfies a first preset condition and the driver's behavior of stepping on the brake pedal when the vehicle travels along the first guiding trajectory does not satisfy a second preset condition.

Optionally, the obtaining unit 1410 is further configured to obtain a first predicted trajectory. The first predicted trajectory is a trajectory predicted for the vehicle when the lateral active safety function is not activated. The determining unit 1420 is further configured to determine a second collision risk incurred when the vehicle travels along the first predicted trajectory. The determining unit 1420 is specifically configured to determine, based on the first collision risk and the second collision risk, whether to activate the lateral active safety function.

Optionally, the determining unit 1420 is specifically configured to determine, based on the first collision risk, the second collision risk, and a type of the obstacle, whether to activate the lateral active safety function.

Optionally, the lateral active safety function is an emergency steering function. The vehicle is in a first lane. The determining unit 1420 is specifically configured to: determine to activate the emergency steering function if the first collision risk between the vehicle and another vehicle in a second lane satisfies a third preset condition and the second collision risk between the vehicle and a VRU in the first lane satisfies a fourth preset condition, where the second lane is adjacent to the first lane; or determine not to activate the emergency steering function if the first collision risk between the vehicle and a VRU in the second lane satisfies the third preset condition and the second collision risk between the vehicle and another vehicle in the first lane satisfies the fourth preset condition.

Optionally, the determining unit 1420 is specifically configured to input a status of the vehicle, a status of the obstacle, the first collision risk, and the second collision risk into a prediction model to obtain an evaluation result. The evaluation result indicates whether to activate the lateral active safety function. The prediction model is obtained through training with sample data. The sample data includes a status of a sample vehicle, a status of a sample obstacle, a risk of colliding with the sample obstacle when the sample vehicle travels along a second guiding trajectory, and a risk of colliding with the sample obstacle when the sample vehicle travels along a second predicted trajectory.

For example, the obtaining unit 1410 may be the computing platform in FIG. 1, or a processing circuit, a processor, or a controller in the computing platform. For example, the obtaining unit 1410 is the processor 121 in the computing platform. The processor 121 may obtain a guiding trajectory planned when the lateral active safety function is pre-activated for the vehicle.

For another example, the determining unit 1420 may be the computing platform in FIG. 1, or a processing circuit, a processor, or a controller in the computing platform. For example, the determining unit 1420 is the processor 122 in the computing platform. The processor 122 may evaluate safety of the guiding trajectory obtained by the processor 121, and determine, based on a safety evaluation result, whether to activate the lateral active safety function.

A function implemented by the obtaining unit 1410 and a function implemented by the determining unit 1420 may be implemented by different processors, or may be implemented by a same processor. This is not limited in embodiments of this application.

It should be understood that division into the units in the apparatus is merely logical function division. During actual implementation, all or some of the units may be integrated into one physical entity or may be physically separated. In addition, the units of the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of the units of the apparatus. The processor is, for example, a general-purpose processor, such as a CPU or a microprocessor. The memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated and implemented in a form of a SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

Embodiments of this application further provide an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is in the vehicle, the processing unit may be the processors 121 to 12n shown in FIG. 1.

Embodiments of this application further provide a vehicle lateral control system. The control system may include a computing platform and a sensing system. The computing platform may include the foregoing vehicle lateral control apparatus 1400.

Embodiments of this application further provide a vehicle. The vehicle may include the foregoing vehicle lateral control apparatus 1400 or vehicle lateral control system.

Embodiments of this application further provide a computer program product. The computer program product includes computer program code. When the computer program code is run on a computer, the computer is enabled to perform the vehicle lateral control method in the foregoing embodiments.

Embodiments of this application further provide a computer-readable medium. The computer-readable medium stores program code. When the computer program code is run on a computer, the computer is enabled to perform the vehicle lateral control method in the foregoing embodiments.

Embodiments of this application further provide a chip. The chip includes a circuit. The circuit is configured to perform the vehicle lateral control method in the foregoing embodiments.

In an implementation process, the steps in the foregoing methods may be implemented by using a hardware integrated logic circuit in the processor or by using instructions in a form of software. The methods disclosed with reference to embodiments of this application may be directly performed and completed by a hardware processor, or may be performed and completed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in a memory. The processor reads information in the memory, and completes the steps in the foregoing methods in combination with the hardware in the processor. To avoid repetition, details are not described herein again.

It should be understood that in embodiments of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

If implemented in a form of a software functional unit and sold or used as a standalone product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes instructions for enabling a computer device (which may be a personal computer, a server, a network device, or the like) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle lateral control method, comprising:
obtaining a first guiding trajectory, wherein the first guiding trajectory is a trajectory obtained after a lateral active safety function is pre-activated; and
determining, based on a first collision risk incurred when a vehicle travels along the first guiding trajectory, whether to activate the lateral active safety function.

2. The method according to claim 1, wherein determining, based on the first collision risk incurred when the vehicle travels along the first guiding trajectory, whether to activate the lateral active safety function comprises:
determining, based on the first collision risk and somatosensory comfort brought to a user when the vehicle travels along the first guiding trajectory, whether to activate the lateral active safety function, wherein the user is in a cabin of the vehicle, and the somatosensory comfort is determined based on a distance between the vehicle and an obstacle and/or a driver's behavior of stepping on a brake pedal.

3. The method according to claim 1 or 2, wherein the lateral active safety function is a lane keeping function, the vehicle is in a first lane, the first lane comprises a first lane line and a second lane line, and obtaining the first guiding trajectory comprises:
obtaining the first guiding trajectory when a distance between the vehicle and the first lane line is less than or equal to a first preset distance; wherein
determining, based on the first collision risk and the somatosensory comfort brought to the user when the vehicle travels along the first guiding trajectory, whether to activate the lateral active safety function comprises:
determining not to activate the lane keeping function if the distance between the vehicle and the obstacle is less than or equal to a preset distance when the vehicle travels along the first guiding trajectory, wherein the obstacle is a vehicle straddling the second lane line.

4. The method according to claim 1 or 2, wherein the lateral active safety function is a lane keeping function, the vehicle is in a first lane, and obtaining the first guiding trajectory comprises:
obtaining the first guiding trajectory when a distance between the vehicle and a second lane is less than or equal to a first preset distance; wherein
determining, based on the first collision risk and the somatosensory comfort brought to the user when the vehicle travels along the first guiding trajectory, whether to activate the lateral active safety function comprises:
activating the lane keeping function if a risk of colliding with the obstacle in the second lane when the vehicle travels along a predicted trajectory satisfies a first preset condition and the driver's behavior of stepping on the brake pedal when the vehicle travels along the first guiding trajectory does not satisfy a second preset condition.

5. The method according to claim 1 or 2, wherein before determining, based on the first collision risk incurred when the vehicle travels along the first guiding trajectory, whether to activate the lateral active safety function, the method further comprises:
obtaining a first predicted trajectory, wherein the first predicted trajectory is a trajectory predicted for the vehicle when the lateral active safety function is not activated; and
determining a second collision risk incurred when the vehicle travels along the first predicted trajectory; wherein
determining, based on the first collision risk incurred when the vehicle travels along the first guiding trajectory, whether to activate the lateral active safety function comprises:
determining, based on the first collision risk and the second collision risk, whether to activate the lateral active safety function.

6. The method according to claim 5, wherein determining, based on the first collision risk and the second collision risk, whether to activate the lateral active safety function comprises:
determining, based on the first collision risk, the second collision risk, and a type of the obstacle, whether to activate the lateral active safety function.

7. The method according to claim 6, wherein the lateral active safety function is an emergency steering function, the vehicle is in a first lane, and determining, based on the first collision risk, the second collision risk, and the type of the obstacle, whether to activate the lateral active safety function comprises:
determining to activate the emergency steering function if the first collision risk between the vehicle and another vehicle in a second lane satisfies a third preset condition and the second collision risk between the vehicle and a vulnerable road user VRU in the first lane satisfies a fourth preset condition, wherein the second lane is adjacent to the first lane; or
determining not to activate the emergency steering function if the first collision risk between the vehicle and a VRU in the second lane satisfies the third preset condition and the second collision risk between the vehicle and another vehicle in the first lane satisfies the fourth preset condition.

8. The method according to claim 6 or 7, wherein determining, based on the first collision risk and the second collision risk, whether to activate the lateral active safety function comprises:
inputting a status of the vehicle, a status of the obstacle, the first collision risk, and the second collision risk into a prediction model to obtain an evaluation result, wherein the evaluation result indicates whether to activate the lateral active safety function; wherein
the prediction model is obtained through training with sample data, and the sample data comprises a status of a sample vehicle, a status of a sample obstacle, a risk of colliding with the sample obstacle when the sample vehicle travels along a second guiding trajectory, and a risk of colliding with the sample obstacle when the sample vehicle travels along a second predicted trajectory.

9. A vehicle lateral control apparatus, comprising:
an obtaining unit, configured to obtain a first guiding trajectory, wherein the first guiding trajectory is a trajectory obtained after a lateral active safety function is pre-activated; and
a determining unit, configured to determine, based on a first collision risk incurred when a vehicle travels along the first guiding trajectory, whether to activate the lateral active safety function.

10. The apparatus according to claim 9, wherein the determining unit is specifically configured to:
determine, based on the first collision risk and somatosensory comfort brought to a user when the vehicle travels along the first guiding trajectory, whether to activate the lateral active safety function, wherein the user is in a cabin of the vehicle, and the somatosensory comfort is determined based on a distance between the vehicle and an obstacle and/or a driver's behavior of stepping on a brake pedal.

11. The apparatus according to claim 9 or 10, wherein the lateral active safety function is a lane keeping function, the vehicle is in a first lane, and the first lane comprises a first lane line and a second lane line;
the obtaining unit is specifically configured to obtain the first guiding trajectory when a distance between the vehicle and the first lane line is less than or equal to a first preset distance; and
the determining unit is specifically configured to determine not to activate the lane keeping function if the distance between the vehicle and the obstacle is less than or equal to a preset distance when the vehicle travels along the first guiding trajectory, wherein the obstacle is a vehicle straddling the second lane line.

12. The apparatus according to claim 9 or 10, wherein the lateral active safety function is a lane keeping function, and the vehicle is in a first lane;
the obtaining unit is specifically configured to obtain the first guiding trajectory when a distance between the vehicle and a second lane is less than or equal to a first preset distance; and
the determining unit is specifically configured to activate the lane keeping function if a risk of colliding with the obstacle in the second lane when the vehicle travels along a predicted trajectory satisfies a first preset condition and the driver's behavior of stepping on the brake pedal when the vehicle travels along the first guiding trajectory does not satisfy a second preset condition.

13. The apparatus according to claim 9 or 10, wherein
the obtaining unit is further configured to obtain a first predicted trajectory, wherein the first predicted trajectory is a trajectory predicted for the vehicle when the lateral active safety function is not activated; and
the determining unit is further configured to determine a second collision risk incurred when the vehicle travels along the first predicted trajectory; wherein
the determining unit is specifically configured to:
determine, based on the first collision risk and the second collision risk, whether to activate the lateral active safety function.

14. The apparatus according to claim 13, wherein the determining unit is specifically configured to:
determine, based on the first collision risk, the second collision risk, and a type of the obstacle, whether to activate the lateral active safety function.

15. The apparatus according to claim 14, wherein the lateral active safety function is an emergency steering function, and the vehicle is in a first lane; and
the determining unit is specifically configured to:
determine to activate the emergency steering function if the first collision risk between the vehicle and another vehicle in a second lane satisfies a third preset condition and the second collision risk between the vehicle and a vulnerable road user VRU in the first lane satisfies a fourth preset condition, wherein the second lane is adjacent to the first lane; or
determine not to activate the emergency steering function if the first collision risk between the vehicle and a VRU in the second lane satisfies the third preset condition and the second collision risk between the vehicle and another vehicle in the first lane satisfies the fourth preset condition.

16. The apparatus according to claim 14 or 15, wherein the determining unit is specifically configured to:
input a status of the vehicle, a status of the obstacle, the first collision risk, and the second collision risk into a prediction model to obtain an evaluation result, wherein the evaluation result indicates whether to activate the lateral active safety function; wherein
the prediction model is obtained through training with sample data, and the sample data comprises a status of a sample vehicle, a status of a sample obstacle, a risk of colliding with the sample obstacle when the sample vehicle travels along a second guiding trajectory, and a risk of colliding with the sample obstacle when the sample vehicle travels along a second predicted trajectory.

17. A vehicle lateral control apparatus, comprising:
a memory, configured to store a computer program; and
a processor, configured to execute the computer program stored in the memory, so that the apparatus is enabled to perform the method according to any one of claims 1 to 8.

18. A vehicle, comprising the apparatus according to any one of claims 9 to 17.

19. A computer-readable storage medium, storing instructions, wherein when the instructions are executed by a processor, the processor is enabled to implement the method according to any one of claims 1 to 8.

20. A computer program product, wherein the computer program product comprises computer program code, and when the computer program code is run on a computer, the computer is enabled to implement the method according to any one of claims 1 to 8.

21. A chip, wherein the chip comprises a circuit, and the circuit is configured to perform the method according to any one of claims 1 to 8.
